# EUROPEAN PATENT APPLICATION

(11) **EP 4 598 127 A1**
(43) Date of publication of application: **06.08.2025**
(21) Application number: 25155850.8
(22) Date of filing: 04.02.2025
(51) Int. Cl.: H04W 36/08

(54) **METHOD AND APPARATUS FOR PERFORMING LTM (L1/L2 TRIGGERED MOBILITY)**

(30) Priority: 05.02.2024 KR 20240017744; 13.01.2025 KR 20250004544
(71) Applicant: KT Corporation, Seongnam-si, Gyeonggi-do 13606 (KR)
(72) Inventor: HONG, Sung-pyo, Seongnam-si, Gyeonggi-do 13606 (KR)
(74) Representative: BCKIP Part mbB

(57) **Abstract**

Disclosed are a method and apparatus for performing layer 1 (L1)/layer 2 (L2) triggered mobility (LTM) in a wireless communication system. The UE performs first comparison between a first identification information value of a serving cell and a second identification information value of a target cell to determine whether to reestablish a packet data convergence protocol (PDCP) in an LTM procedure. In addition, after performing the first comparison in the LTM procedure, the UE performs second comparison between a third identification information value of the serving cell and a fourth identification information value of the target cell to determine whether to reset the L2. Then, the UE performs an L2 reset operation based on the first comparison and the second comparison in the LTM procedure.

## Description

### CROSS-REFERENCE TO RELATED THE APPLICATION

This application is based on and claims priority on Patent Application No. 10-2024-0017744 filed on Feb. 5, 2024, and No. 10- 2025-0004544 filed on Jan. 13, 2025 in the Korean Intellectual Property Office.

### BACKGROUND

### Technical Field

The present specification relates to wireless communication applicable to 5G NR, 5G-Advanced and 6G.

### Description of the Related Art

With the increase in the number of communication devices, there is a consequent rise in communication traffic that needs to be managed. To handle this increased communication traffic, a next generation 5G system, which is an enhanced mobile broadband communication system compared to the exiting LTE system, has become necessary. Such a next generation 5G system has been developed based on scenarios which are classified into Enhanced Mobile BroadBand (eMBB), Ultra-reliability and low-latency communication (URLLC), Massive Machine-Type Communications (mMTC), and the like.

eMBB, URLLC, and mMTC are represent next generation mobile communication scenarios. eMBB is characterized by high spectrum efficiency, high user experienced data rate, high peak data. URLLC is characterized by ultra-reliable, ultra-low latency, ultra-high availability (e.g., vehicle-to-everything (V2X), Emergency Service, Remote Control). mMTC is characterized by low cost, low energy, short packet, and massive connectivity (e.g., Internet of Things (IoT)).

### SUMMARY

The present disclosure relates to L1/L2 Triggered Mobility (LTM) for a terminal in a wireless communication system. The present disclosure is to provide a method and apparatus for performing LTM between different base stations/gNB-central unit (CU).

In accordance with an embodiment of the disclosure, a method may be provided for a UE to perform communication in wireless communication network. The method may include performing first comparison between a first identification information value of a serving cell and a second identification information value of a target cell to determine whether to reestablish a packet data convergence protocol (PDCP) in an LTM procedure, performing second comparison between a third identification information value of the serving cell and a fourth identification information value of the target cell to determine whether to reset the L2, and performing an L2 reset operation based on the first comparison and the second comparison in the LTM procedure.

In accordance with an embodiment of the disclosure, a UE may be provided in a wireless communication system. The UE may include at least one processor; and at least one memory configured to store instructions and operably electrically connectable to the at least one processor, wherein operations performed based on the instructions executed by the at least one processor include: performing first comparison between a first identification information value of a serving cell and a second identification information value of a target cell to determine whether to reestablish a packet data convergence protocol (PDCP) in an LTM procedure; performing, second comparison between a third identification information value of the serving cell and a fourth identification information value of the target cell may be performed to determine whether to reset the L2; and performing an L2 reset operation based on the first comparison and the second comparison in the LTM procedure

The L2 reset operation may include a radio link control (RLC) reconfiguration. In addition, the L2 reset operation may further include a PDCP data recovery for an acknowledged mode (AM) data radio bearer (DRB).

Meanwhile, the first identification information value and the second identification information value may be equal to each other, and the third identification information value and the fourth identification information value may be different from each other.

The LTM procedure may correspond to an inter-base station LTM procedure.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIG. 7 shows an example of an LTM cell switch scenario.
FIG. 8 is a signal diagram illustrating a procedure for inter-gNB LTM according to an embodiment of the disclosure.
FIG. 9 is a block diagram showing apparatuses according to an embodiment of the disclosure.
FIG. 10 is a block diagram showing a terminal according to an embodiment of the disclosure.
FIG. 11 is a block diagram of a processor in accordance with an embodiment.
FIG. 12 is a detailed block diagram of a transceiver of a first apparatus shown in FIG. 9 or a transceiving unit of an apparatus shown in FIG. 10.

### DETAILED DESCRIPTION

The technical terms used in this document are for merely describing specific embodiments and should not be considered limiting the embodiments of disclosure. Unless otherwise defined, the technical terms used in this document should be interpreted as commonly understood by those skilled in the art and should not be interpreted too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

Abase station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

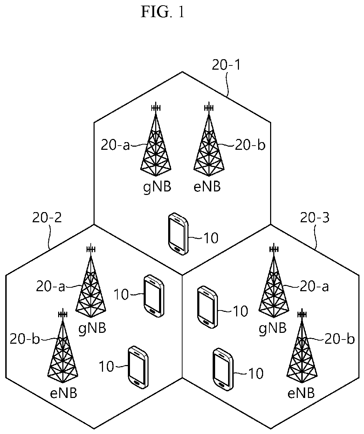

**FIG. 1** **is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

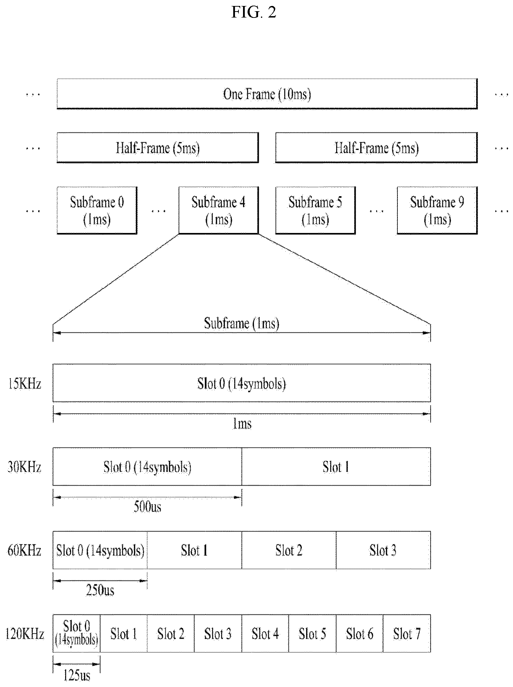

**FIG. 2** **is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2^{µ.}15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) according to each numerology expressed by µ in the case of a normal CP.

**Table 3**

| µ | Δf=2^{µ}·15 [kHz] | N^{slot}_{symb} | N^{rame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

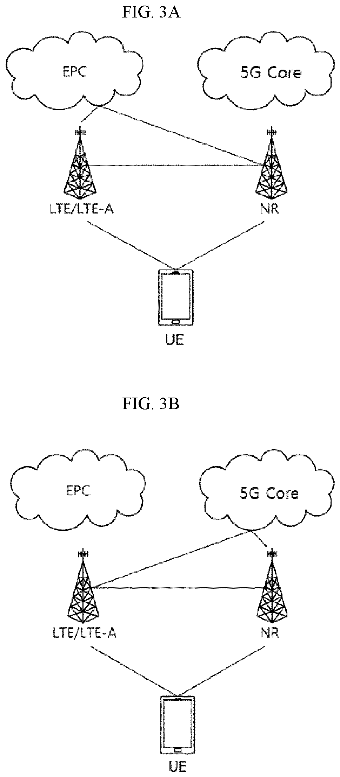

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

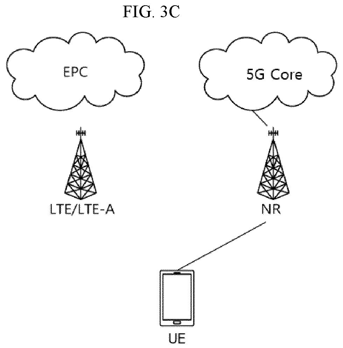

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

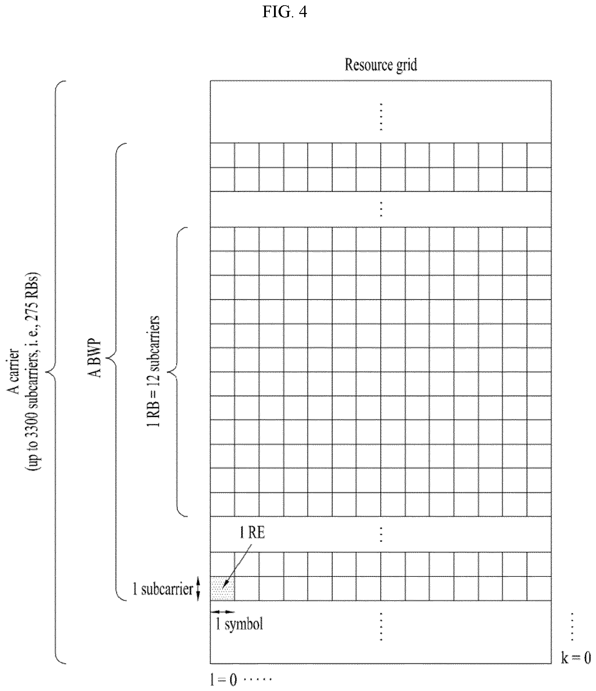

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

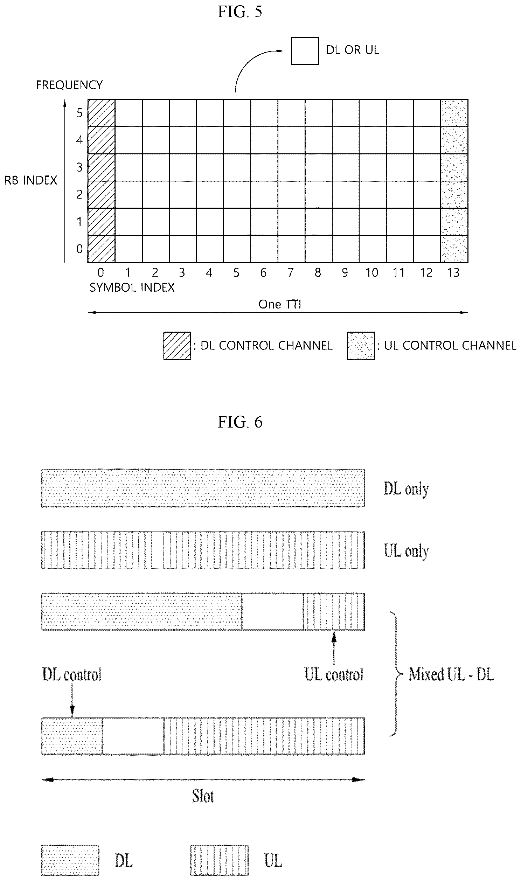

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration
   - DL region + Guard Period (GP) + UL control region
   - DL control region + GP + UL region

DL region: (i) DL data region, (ii) DL control region + DL data region
UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some of symbols within a subframe that transition from DL to UL mode may be configured as the GP.

### LTM (L1/L2 Triggered Mobility)

The present disclosure relates to L1/L2 Triggered Mobility (LTM) for a UE.

In 3GPP, standardization of L1/L2 Triggered Mobility (LTM) functions was carried out in release-18 (Rel-18). Hereinafter, L1/L2 Triggered Mobility is referred to as LTM. However, this is only for the convenience of description. The embodiments are not limited thereto. The term "LTM" may be replaced by any other terms, such as Layer 1 Mobility, Layer 2 Mobility, and lower layer Mobility. In particular, the LTM refers to a procedure of the gNB, which receives an L1 measurement report from the UE, and, changes a serving cell (e.g., PCell/PSCell) of the UE based on the L2 measurement report by a cell switch command signaled through a medium access control (MAC) control element (CE). The cell switch command instructs the configuration of an LTM candidate prepared in advance by the gNB and provided to the UE through radio resource control (RRC) signaling. The UE switches to the target cell based on the cell switch command.

The Rel-18 LTM supports both intra-gNB-Distributed Unit (DU) Mobility and intra-gNB-Central Unit (CU) Mobility. That is, in the prior art, the LTM supported only cell change within the gNB-CU (intra-gNB-CU mobility). Therefore, to provide mobility between different base stations/gNB-CUs (e.g., inter-gNB-CU mobility) to the UE, a handover method based on a typical layer 3 (L3) should be used rather than LTM. The typical layer 3 based handover is a network-based handover in which a source base station sends an RRC reconfiguration message containing information required to access a target cell (e.g., reconfigurationwithsync, a handover command) to trigger a handover, or a conditional handover executed by the UE when handover execution conditions are met. Thus, an interruption time may increase compared to that of the LTM during the cell change process. Here, the aforementioned gNB-CU refers to a logical node that hosts the radio resource control (RRC), service data adaptation protocol (SDAP), and packet data convergence protocol (PDCP) layers of the base station (or a logical node that hosts one or more of the radio access upper layer protocols). To support efficient network construction, NR provides a structure for dividing the base stations (gNB) into centralized nodes (hereinafter referred to as CU/gNB-CU for the convenience of description) and distributed nodes (hereinafter referred to as DU/gNB-DU for the convenience of description). The wireless network includes one set of base stations connected to a 5G Core network (5GC) through an NG interface. The Base stations are interconnected through an Xn interface. One base station may include one gNB-CU and one or more gNB-DUs. The gNB-CU and the gNB-DU are connected through an F1 interface. One gNB-DU is connected to only one gNB-CU. The NG interface and Xn-C interface for one base station including the gNB-CU and gNB-DU are terminated at the gNB-CU. The gNB-DUs connected to the gNB-CU are regarded as only one base station to other base stations and 5GC. The gNB-DU refers to a logical node that hosts the radio link control (RLC), medium access control (MAC), and physical (PHY) layers of a base station (or a logical node that hosts one or more radio access protocols not included in the gNB-CU). One gNB-DU supports one or multiple cells. One cell is supported by only one gNB-DU.

The typical intra-gNB-CU LTM supports subsequent LTM (LTM cell switch procedures between candidate cells without RRC reconfiguration by the network in between). With this, fast cell switching between the candidate cells can continue without an RRC reconfiguration. In the case of intra-gNB-CU LTM, it may be easy for one base station providing the LTM candidate cells to support the subsequent LTM through one RRC reconfiguration. However, in the case of inter-gNB-CU LTM, the LTM candidate cells are provided through two different base stations, making it difficult to support the subsequent LTM.

As described above, the typical LTM only supports the intra gNB-CU mobility. To provide the inter-gNB-CU mobility, the handover method based on L3 rather than the LTM should be used, which causes an increase in the interruption time during the cell switching process compared to LTM and makes it difficult to support the subsequent LTM. Accordingly, the disclosure is conceived to solve these problems and proposes a method and apparatus for performing LTM to support inter-base station LTM (e.g., inter-gNB-CU LTM).

Hereinafter, a method of providing mobility will be described in detail based on 5G NR wireless access technology. However, embodiments of the disclosure are not limited thereto. Such description is only for the convenience of description. The embodiments of the disclosure may be applied to the cell change/switch based on any wireless access technology (e.g., 6G). The embodiments of the disclosure may be described with reference to the information elements, procedures, and operation contents specified in the NR standards (e.g., NR MAC standards, i.e., TS 38.321, and the NR RRC standards, i.e., TS 38.331). Although the definition of the information element, the related procedures, and the related UE operation contents are not described in this specification, the corresponding contents specified in the standard specifications, which are publicly known technologies, may be included in the disclosure. The embodiments set forth herein may be implemented individually or in any combination thereof, and it is obvious that this also falls within the scope of the disclosure.

Any functions described below may be defined as an individual UE radio capability or UE Core network capability and transmitted to the base station/core network entity (for example, Access and Mobility Management Function (AMF)/ Session Management Function (SMF)) by the UE through corresponding signaling. Alternatively, any functions may be combined, defined as the UE capability, and transmitted to the base station/core network entity through the corresponding signaling by the request of the UE.

The base station may transmit/instruct information indicating the allowance /support/configuration/activation states of the corresponding functions/function combination for any functions or a combination of functions set forth herein to the UE through an RRC message. For example, this information may be instructed to the UE before or after the configuration/application of the corresponding functions/function combination, or simultaneously with the configuration/application of the functions/function combination. The RRC message may be broadcast through system information. Alternatively, the information may be instructed to the UE through a dedicated RRC message.

The typical 3GPP Rel-18 LTM instructs the cell switch command based on the MAC CE. However, the disclosure may also include an LTM method of instructing the cell switch command through not only the MAC CE but also downlink control information (DCI).

### Definition of information to determine/instruct whether to re-establish PDCP

The LTM procedure is divided into an LTM preparation step to prepare an LTM candidate configuration, an early synchronization step, an LTM cell switch execution step, and an LTM cell switch completion step. In the LTM cell switch execution step, when the UE performs L1 measurement for the configured candidate cell and transmits an L1 measurement report to the base station, the base station determines cell switch execution to the target cell and transmits LTM cell switch MAC CE including the candidate configuration index of the target cell to the UE, and then the UE switches over to the target cell and applies the configuration indicated by the candidate configuration index.

In the case of the LTM within the same base station/gNB-CU (Intra-gNB-CU LTM), the LTM cell switch may be performed/executed/prepared/completed in a state that the packet data convergence protocol (PDCP) entity of the UE and base station is maintained for a signaling radio bearer (SRB)/data radio bearer (DRB). When the LTM switch is triggered, the PDCP entity, corresponding state variable, buffer, and timer may be maintained for each SRB/DRB in the current UE configuration. In the case of LTM in the same gNB-DU within the same base station/gNB-CU, no additional operations for the PDCP entity are separately required. For example, when an LTM cell switch is performed between different gNB-DUs within the same base station/gNB-CU, a radio link control (RLC) reconfiguration and a PDCP data recovery procedure may be triggered as the UE switches over from a cell belong to the source/serving gNB-DU to a cell belonging to a target/candidate gNB-DU that is different from the source/serving gNB-DU. If the LTM cell switch is performed from a source/serving cell to a target/candidate cell belonging to the same gNB-DU within the same base station/gNB-CU, the UE may maintain the RLC entity without RLC reconfiguration. Therefore, there was no need to consider the PDCP re-establishment or security key refresh/update operations in the intra-base station LTM cell switch processes.

However, in the typical intra-base station LTM technology, when the LTM from the source/serving cell to the target/candidate cell is performed, it is necessary to distinguish between an LTM cell switch between the cells belonging to different gNB-DUs within the same base station/gNB-CU or an LTM cell switch between the cells belonging to the same gNB-DUs within the same base station/gNB-CU so as to perform the LTM cell switch. To this end, the RLC reconfiguration is performed if the source/serving cell and the target/candidate cell do not have the same value through information for determining/instructing whether to reset the L2 when the LTM is performed from the source/serving cell to the target/candidate cell (ID/Information based on which the UE determines whether a L2 reset is needed or not upon an LTM cell switch procedure). Otherwise, the RLC reconfiguration was not performed. However, in the case of the inter-base station LTM, it is difficult to maintain the PDCP, and it is thus difficult to process the proper user plane data if the RLC reconfiguration is performed using only information to instruct whether to reset the L2 of the source/serving cell and target/candidate cell.

In order to support the LTM between base stations/gNB-CUs (Inter-gNB-CU LTM), the LTM should be performed through different base stations/gNB-CUs between the source/serving cell and the target/candidate cell. Because the base station/gNB-CU hosting the PDCP is changed and it is thus difficult to maintain the PDCP entity during the LTM process, the PDCP re-establishment needs to be performed. Lossless transmission for acknowledge mode (AM) DRB may be supported through the PDCP re-establishment and may be applied when security key refresh/update or ciphering/integrity protection algorithm change is necessary.

To support this, information for determining/instructing whether to re-establish the PDCP may be defined when the LTM from the source/serving cell to the target/candidate cell is performed.

For example, when the LTM is performed from the source/serving cell to the target/candidate cell, the information for determining/instructing whether to re-establish the PDCP may be information/index/identity (ID) to determine/instruct/distinguish whether the LTM is the inter-base station/gNB-CU LTM between the source/serving cell and the target/candidate cell belonging to different base stations or the intra-base station/gNB-CU LTM between the source/serving cell and the target/candidate cell belonging to the same base station. This information may be information/index/ID to determine/instruct/distinguish the inter-base station/gNB-CU LTM where an LTM cell switch triggers a path switch request. This information may be information/index/ID used to determine/instruct/distinguish whether security key refresh/update is necessary. This information may be information/index/ID used to determine/instruct/distinguish whether the Next Hop Chaining Counter (NCC) value currently maintained by the UE needs to be updated (e.g., increased by 1 or maintained). This information may be information/index/ID to determine/instruct/distinguish the NCC value currently maintained by the UE to be reset (e.g., reset/initialized to 0). This information may be information/index/ID used to determine/instruct/distinguish whether the PDCP re-establishment (or reconfiguration for the PDCP entities) is necessary during the LTM cell switch process. For the convenience of description, this information will be referred to as "LTM-No-PDCP-reestablish-ID". This is for the convenience of description, and this information may be given any other names (e.g., LTM security parameter updater information, LTM security-update-ID, LTM-NCC-update-ID, LTM-key-derivation-ID, LTM-PDCP-reestablish-ID, LTM-No-PDCP-reset-ID). The corresponding information/index/ID may be included in the LTM configuration (LTM-Config) information element indicated through an RRC reconfiguration message. Here, the LTM configuration information element is used to provide LTM candidate configurations and is associated with a master cell group (MCG) or a secondary cell group (SCG). The LTM configuration includes sub-configuration information elements, such as LTM-reference configuration including an RRC reconfiguration message used to configure the reference configuration for the LTM (ltm-reference configuration), information to instruct the LTM cell switch when the selected cell is an LTM candidate cell and it is the first cell selection after failure (attemptLTM-Switch), LTM candidate configuration list information to be added/modified (ltm-CandidateToAddModList), LTM candidate configuration list information to be released (ltm-CandidateToReleaseList), an LTM CSI resource list to be added/modified (ltm-CSI-ResourceConfigList), L2 reset instruction information for the serving cell (to determine whether to reset the L2 for the candidate cell) (e.g. ltm-ServingCellNoResetID or information to determine/instruct whether to reset the L2 for the serving cell), and information used by the UE to determine whether to perform UE-based TA measurement (ltm-ServingCellUE-MeasuredTA-ID).

For another example, the LTM configuration (LTM-Config) information may include identification/distinguishment information about the serving cell for determining/instructing whether to re-establish the PDCP when the UE performs the LTM from the source/serving cell to the target/candidate cell. For example, the LTM configuration (LTM-Config) information may include LTM-No-PDCP-reestablish-ID about the serving cell to instruct identification/distinguishment information about the current serving cell/cell group that serves as a basis for determining whether the UE needs (or performs) a particular PDCP operation (e.g., PDCP re-establishment and/or security key update/refresh) (or a basis for determining the operations of the UE including whether to need/perform the specific PDCP operation) (or LTM-No-PDCP-reestablish-ID information about the current serving cell/cell group, or information for identifying/distinguishing/grouping the current serving cell/special cell/cell group generated based on a reference configuration and/or candidate configuration applied to the current serving cell/cell group, or LTM-No-PDCP-reestablish-ID of the current serving cell/special cell/cell group generated based on the reference configuration and/or candidate configuration applied to the current serving cell/cell group).

For another example, the LTM-No-PDCP-reestablish-ID about the serving cell to instruct identification/distinguishment information about the current serving cell/cell group that serves as a basis for determining whether the UE needs (or performs) a particular PDCP operation (e.g., PDCP re-establishment and/or security key update/refresh) (or a basis for determining the operations of the UE including whether to need/perform the specific PDCP operation) (or LTM-No-PDCP-reestablish-ID information about the current serving cell/cell group, or information for identifying/distinguishing/grouping the current serving cell/special cell/cell group generated based on a reference configuration and/or candidate configuration applied to the current serving cell/cell group, or LTM-No-PDCP-reestablish-ID of the current serving cell/special cell/cell group generated based on the reference configuration and/or candidate configuration applied to the current serving cell/cell group) may be stored/managed as UE information during the LTM cell switch. For the convenience of description, this UE information is referred to as a "serving cell LTM-No-PDCP-reestablish-ID UE variable" below. This is for the convenience of description and may be replaced with any other names (e.g. LTM security-update-UE variable, LTM-NCC-update-UE variable, LTM-key-derivation-UE variable, LTM-PDCP-reestablish-UE variable, and LTM-No-PDCP-reset-UE variable).

For another example, the information for determining/instructing/distinguishing whether to re-establish the PDCP when the LTM is performed from the source/serving cell to the target/candidate cell, used to support the inter-base station LTM, may be instructed to the UE through the LTM cell switch MAC CE. When determining an LTM cell switch, the network/base station/gNB-CU/gNB-DU identifies whether the LTM is the inter-base station/gNB-CU LTM where the source/serving cell and the target/candidate cell belong to different base stations, or the intra-base station/gNB-CU LTM where the source/serving cell and the target/candidate cell belong to the same base station. The base station may instruct the corresponding information through the LTM cell switch MAC CE, thereby reducing the complexity in which the UE operates through the corresponding RRC configuration information. To this end, the LTM cell switch MAC CE distinguished from the typical LTM cell switch MAC CE (e.g., different in Logical Channel ID (LCID) from the typical LTM cell switch MAC CE) may be added.

### LTM performed considering both information to determine/instruct whether to reset L2 and information whether to reestablish PDCP

Because the inter-base station LTM requires the PDCP re-establishment, it may be difficult to perform proper user plane data processing when the RLC reconfiguration is performed using only information that instructs whether to reset the L2 in the source/serving cell and the target/candidate cell during an inter-base station LTM execution process. Thus, it is necessary to execute the LTM considering both the L2 reset determination/instruction information (e.g., ltm-NoResetID) and the PDCP re-establishment determination/instruction information.

For example, when the LTM cell switch is triggered when the UE receives the LTM cell switch MAC CE, the RRC layer of the UE that received the corresponding instruction from the MAC layer may release/remove the current dedicated radio configuration associated with the cell group for which the LTM cell switch procedure was triggered. In this case, a UE variable used to store the information for determining/instructing whether to reestablish the PDCP (for example, a serving cell LTM-No-PDCP-reestablish-ID UE variable) may be excluded when the LTM is performed from the serving cell to the candidate cell, and a UE variable used to store the information for determining/instructing whether to reset the L2 may be excluded in releasing/removing the current dedicated radio configuration associated with the cell group, for which the LTM cell switch procedure was triggered, when the LTM is performed from the serving cell to the candidate cell.

For another example, when the LTM cell switch is triggered as the UE receives the LTM cell switch MAC CE, the RRC of the UE that received the corresponding instruction by the MAC layer may release/remove the current dedicated radio configuration associated with the cell group for which the LTM cell switch procedure was triggered. In this case, a UE variable used to store the information for determining/instructing whether to reestablish the PDCP (for example, a serving cell LTM-No-PDCP-reestablish-ID UE variable) may be excluded when the LTM is performed from the serving cell to the candidate cell, and a UE variable used to store the information for determining/instructing whether to reset the L2 may be maintained, i.e., not removed when the LTM is performed from the serving cell to the candidate cell.

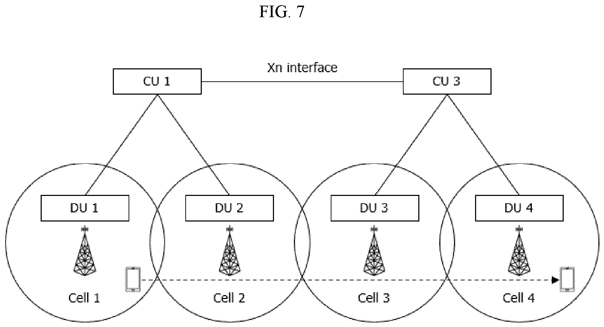

For another example, the candidate cells configured with different LTM-No-PDCP-reestablish-ID values may also be configured with different values for information for determining/instructing whether to reset the L2 when the LTM is performed from the serving cell to the candidate cell (or information for determining/instructing whether to reset the L2 for the candidate cell, ltm-NoResetID). For example, in FIG. 7, a candidate cell 1 and a candidate cell 3 belong to different base stations CU1 and CU2, respectively. The LTM-No-PDCP-reestablish-ID value for the candidate cell 1 and the LTM-No-PDCP-reestablish-ID value for the candidate cell 3 may be different (e.g., the LTM-No-PDCP-reestablish-ID for the candidate cell 1 = 1, and LTM-No-PDCP-reestablish-ID the candidate cell 3 = 2). In this case, the ltm-NoResetID value for the candidate cell 1 and the ltm-NoResetID value for the candidate cell 3 may be different (e.g., ltm-NoResetID for the candidate cell 1 = 1, and ltm-NoResetID for the candidate cell 3 = 3). With this, the PDCP re-establishment and the RLC re-establishment may be performed together when the LTM cell switch is performed between different base stations.

For another example, if the information for determining/instructing whether to reset the L2 is configured with different values when the LTM is performed from the serving cell to the candidate cell, the LTM-No-PDCP-reestablish-ID (LTM-No-PDCP-reestablish-ID for the candidate cell) may be configured with either the same value or different values. When it is configured with the same value (for example, in the case of the LTM between inter-DUs within the intra-base station), the RLC establishment and PDCP data recovery may be performed.

For another example, in the LTM execution procedure, comparison between the value of the information for determining/instructing whether to reestablish the PDCP for the candidate cell and the value of the information for determining/instructing whether to reestablish the PDCP for the serving cell may be performed prior to comparison between the value of the information for determining/instructing whether to reset the L2 for the candidate cell and the value of the information for determining/instructing whether to reset the L2 for the serving cell. For example, if the PDCP re-establishment is determined by preferentially performing the comparison in whether to reestablish the PDCP, the RLC re-establishment and the PDCP re-establishment may be performed without the comparison in whether to reset the L2 (e.g., in the order of the RLC re-establishment → the PDCP re-establishment, or the PDCP re-establishment → the RLC re-establishment). If the PDCP re-establishment is not determined by preferentially performing the comparison in whether to reestablish the PDCP, the comparison in whether to reset the L2 is performed. In this case, if it is determined to reset the L2, the RLC re-establishment and PDCP data recovery procedures are performed. Otherwise, if the it is not determined to reestablish the RLC, the RLC entities and their state variables/buffers/timers and the PDCP entities and their state variables/buffers/timers may be maintained and used without being released/removed.

If the value of the LTM-No-PDCP-reestablish-ID for the candidate cell included in the LTM candidate information element (e.g., LTM-Candidate information element (IE) within the LTM configuration UE variables (e.g., VarLTM-Config) as instructed by the lower layer) is not equal to the value of LTM-No-PDCP-reestablish-ID for the serving cell in the serving cell LTM-No-PDCP-reestablish-ID UE variable, for each logical channel identity (e.g., logicalChannelId and logicalChannelIdExt), i.e., as part of the current UE configuration for the cell group for which the LTM cell switch procedure is triggered,
i) after applying the LTM configuration in the LTM candidate configuration within the LTM candidate information element in the LTM configuration UE variable (after the end of this procedure), the corresponding RLC entity is reestablished at the end of this procedure (after the end of this procedure, re-establish the corresponding RLC entity, after applying the LTM configuration in ltm-CandidateConfig within LTM-Candidate IE in VarLTM-Config).
ii) the value of the serving cell LTM-ServingCellNoResetID in the serving cell LTM-ServingCellNoResetID UE variable is replaced with the LTM-ServingCellNoResetID value included in the LTM candidate information element within the LTM configuration UE variable as instructed by the lower layer.
iii) for each SRB identity (srb-Identity) and/or DRB identity (drb-Identity) value, i.e., as part of the current UE configuration (for each srb-Identity/drb-Identity value that is part of the current UE configuration), the PDCP re-establishment is performed/triggered for the PDCP entity of the corresponding SRB/DRB after applying the LTM configuration in the LTM candidate information element within the LTM configuration UE variable.
iv) the value of the serving cell LTM-No-PDCP-reestablish-ID in the serving cell LTM-No-PDCP-reestablish-ID UE variable is replaced with the value of the LTM-No-PDCP-reestablish-ID included in the LTM candidate information element within the LTM configuration UE variable as instructed by the lower layer.

Otherwise, (if the value of the LTM-No-PDCP-reestablish-ID (e.g., the LTM-No-PDCP-reestablish-ID for the candidate cell) included in the LTM candidate information element (e.g., LTM-Candidate IE) within the LTM configuration UE variables instructed by the lower layer is equal to the value of LTM-No-PDCP-reestablish-ID for the serving cell in the serving cell LTM-No-PDCP-reestablish-ID UE variable), and if the value of the information (e.g., ltm-NoResetID) for determining/instructing whether to reset the L2 for the candidate cell included in the LTM candidate information element (e.g., LTM-Candidate IE) within the LTM configuration UE variables instructed by the lower layer is not equal to the value of information (e.g., ltm-ServingCellNoResetID) for determining whether to reset the L2 for the serving cell in the UE variables (e.g., VarLTM-ServingCellNoResetID) used to store information for determining/instructing whether to reset the L2 for the serving cell, for each logical channel identity (e.g., logicalChannelId and logicalChannelIdExt), i.e., part of the current UE configuration for the cell group for which the LTM cell switch procedure is triggered,
i) after applying the LTM configuration in the LTM candidate configuration within the LTM candidate information element in the LTM configuration UE variable (after the end of this procedure), the corresponding RLC entity is reestablished at the end of this procedure.
ii) for each DRB identifier (drb-Identity) value that is a part of the current UE configuration, (if the corresponding DRB is AM DRB) the PDCP entity of the corresponding DRB is triggered to perform PDCP data recovery after applying the LTM configuration in the LTM candidate configuration within the LTM candidate information element in the LTM configuration UE variable.
iii) the value of the serving cell LTM-ServingCellNoResetID in the serving cell LTM-ServingCellNoResetID UE variable is replaced with the LTM-ServingCellNoResetID value included in the LTM candidate information element within the LTM configuration UE variable as instructed by the lower layer.

For another example, in the LTM execution procedure, comparison between the value of the information for determining/instructing whether to reset the L2 for the candidate cell and the value of the information for determining/instructing whether to reset the L2 for the serving cell may be performed prior to comparison between the value of the information for determining/instructing whether to reestablish the PDCP for the candidate cell and the value of the information for determining/instructing whether to reestablish the PDCP for the serving cell. For example, if the L2 reset is determined by preferentially performing the comparison of whether to reset the L2, then the comparison of whether to reestablish the PDCP is performed afterward. In this case, if the PDCP re-establishment is determined, the RLC reestablishment and the PDCP re-establishment may be performed (e.g., in the order of the RLC reestablishment → the PDCP re-establishment, or the PDCP re-establishment → the RLC reestablishment). Otherwise, if the PDCP re-establishment is not determined, the RLC reestablishment and PDCP data recovery procedures are performed. If the L2 reset is not determined in the preferentially performed comparison of whether to reset the L2, then the RLC entities and their state variables/buffers/timers as well as the PDCP entities and their state variables/buffers/timers may be maintained and used without being released/removed.

If the value of the information (e.g., ltm-NoResetID) for determining/instructing whether to reset the L2 for the candidate cell included in the LTM candidate information element (e.g., LTM-Candidate IE) within the LTM configuration UE variable (e.g., VarLTM-Config) instructed by the lower layer is not equal to the value of the information (e.g., ltm-ServingCellNoResetID) for determining/instructing whether to reset the L2 for the serving cell within the UE variable (e.g., VarLTM-ServingCellNoResetID) used to store the information for determining/instructing whether to reset the L2 for the serving cell, and if the value of LTM-No-PDCP-reestablish-ID (LTM-No-PDCP-reestablish-ID for the candidate cell) included in the LTM candidate information element (LTM-Candidate IE) within the LTM configuration UE variable as instructed by the lower layer is not equal to the value of LTM-No-PDCP-reestablish-ID for the serving cell in the serving cell TTM-No-PDCP-reestablish-ID UE variable, for each logical channel identity (e.g., logicalChannelId and logicalChannelIdExt), i.e., as part of the current UE configuration for the cell group for which the LTM cell switch procedure is triggered,
i) after applying the LTM configuration in the LTM candidate configuration within the LTM candidate information element in the LTM configuration UE variable (after the end of this procedure), the corresponding RLC entity is reestablished at the end of this procedure (after the end of this procedure, re-establish the corresponding RLC entity, after applying the LTM configuration in ltm-CandidateConfig within LTM-Candidate IE in VarLTM-Config).
ii) the value of the serving cell LTM-ServingCellNoResetID in the serving cell LTM-ServingCellNoResetID UE variable is replaced with the LTM-ServingCellNoResetID value included in the LTM candidate information element within the LTM configuration UE variable as instructed by the lower layer.
iii) for each SRB identity (srb-Identity) and/or DRB identity (drb-Identity) value, i.e., a part of the current UE configuration (for each srb-Identity/drb-Identity value that is part of the current UE configuration), the PDCP re-establishment is performed/triggered for the PDCP entity of the corresponding SRB/DRB after applying the LTM configuration in the LTM candidate information element within the LTM configuration UE variable.
iv) the value of the serving cell LTM-No-PDCP-reestablish-ID in the serving cell LTM-No-PDCP-reestablish-ID UE variable is replaced with the value of the LTM-No-PDCP-reestablish-ID included in the LTM candidate information element within the LTM configuration UE variable as instructed by the lower layer.

Otherwise, (if the value of the LTM-No-PDCP-reestablish-ID (e.g., the LTM-No-PDCP-reestablish-ID for the candidate cell) included in the LTM candidate information element (e.g., LTM-Candidate IE) within the LTM configuration UE variables as instructed by the lower layer is equal to the value of LTM-No-PDCP-reestablish-ID for the serving cell in the serving cell LTM-No-PDCP-reestablish-ID UE variable), for each logical channel identity (e.g., logicalChannelId and logicalChannelIdExt), i.e., as part of the current UE configuration for the cell group for which the LTM cell switch procedure is triggered,
i) after applying the LTM configuration in the LTM candidate configuration within the LTM candidate information element in the LTM configuration UE variable (after the end of this procedure), the RLC entity is reestablished at the end of this procedure.
ii) for each DRB identifier (drb-Identity) value that is part of the current UE configuration, (if the corresponding DRB is AM DRB) the PDCP entity of the corresponding DRB is triggered to perform PDCP data recovery after applying the LTM configuration in the LTM candidate configuration within the LTM candidate information element in the LTM configuration UE variable.
iii) the value of the serving cell LTM-ServingCellNoResetID in the serving cell LTM-ServingCellNoResetID UE variable is replaced with the LTM-ServingCellNoResetID value included in the LTM candidate information element within the LTM configuration UE variable instructed by the lower layer.

For another example, in the LTM execution procedure, comparison between the value of the information for determining/instructing whether to reset the L2 for the candidate cell and the value of the information for determining/instructing whether to reset the L2 for the serving cell may be first performed to determine/instruct the RLC re-establishment when the L2 reset is determined, and then comparison in information for determining/instructing whether to reestablish the PDCP. When the PDCP re-establishment is determined, the PDCP re-establishment may be determined/instructed. Otherwise, if the PDCP re-establishment is not determined, PDCP data recovery procedures are determined/instructed. If the L2 reset is not determined in the preferentially performed comparison in whether to reset the L2, the RLC entities and their state variables/buffers/timers and the PDCP entities and their state variables/buffers/timers may be maintained and used without being released/removed.

If the value of the information (e.g., ltm-NoResetID) for determining/instructing whether to reset the L2 for the candidate cell included in the LTM candidate information element (e.g., LTM-Candidate IE) within the LTM configuration UE variable (e.g., VarLTM-Config) instructed by the lower layer is not equal to the value of the information (e.g., ltm-ServingCellNoResetID) for determining/instructing whether to reset the L2 for the serving cell within the UE variable (e.g., VarLTM-ServingCellNoResetID) used to store the information for determining/instructingwhether to reset the L2 for the serving cell, for each logical channel identity (e.g., logicalChannelId and logicalChannelIdExt), i.e., part of the current UE configuration for the cell group for which the LTM cell switch procedure is triggered,
i) after applying the LTM configuration in the LTM candidate configuration within the LTM candidate information element in the LTM configuration UE variable (after the end of this procedure), the RLC entity is reestablished at the end of this procedure.
ii) the value of the serving cell LTM-ServingCellNoResetID in the serving cell LTM-ServingCellNoResetID UE variable is replaced with the LTM-ServingCellNoResetID value included in the LTM candidate information element within the LTM configuration UE variable instructed by the lower layer.

If the value of the LTM-No-PDCP-reestablish-ID (e.g., the LTM-No-PDCP- reestablish-ID for the candidate cell) included in the LTM candidate information element (e.g., LTM-Candidate IE) within the LTM configuration UE variables as instructed by the lower layer is not equal to the value of LTM-No-PDCP-reestablish-ID for the serving cell in the serving cell LTM-No-PDCP-reestablish-ID UE variable,
i) for each SRB identity (srb-Identity) and/or DRB identity (drb-Identity) value, i.e., a part of the current UE configuration (for each srb-Identity/drb-Identity value that is part of the current UE configuration), the PDCP re-establishment is performed/triggered for the PDCP entity of the corresponding SRB/DRB after applying the LTM configuration in the LTM candidate information element within the LTM configuration UE variable.
ii) the value of the serving cell LTM-No-PDCP-reestablish-ID in the serving cell LTM-No-PDCP-reestablish-ID UE variable is replaced with the value of the LTM-No-PDCP-reestablish-ID included in the LTM candidate information element within the LTM configuration UE variable instructed by the lower layer

Otherwise, (if the value of the LTM-No-PDCP-reestablish-ID (e.g., the LTM-No-PDCP-reestablish-ID for the candidate cell) included in the LTM candidate information element (e.g., LTM-Candidate IE) within the LTM configuration UE variables instructed by the lower layer is equal to the value of LTM-No-PDCP-reestablish-ID for the serving cell in the serving cell LTM-No-PDCP-reestablish-ID UE variable), for each DRB identifier (drb-Identity) value that is a part of the current UE configuration, (if the corresponding DRB is AM DRB) the PDCP entity of the corresponding DRB is triggered to perform PDCP data recovery after applying the LTM configuration in the LTM candidate configuration within the LTM candidate information element in the LTM configuration UE variable.

Hereinafter, another embodiment will be described in detail.

In a typical intra-base station LTM, a security key is maintained in the LTM cell switch. Only reconfiguration with sync for an LTM cell switch (without security key refresh) is supported. Additionally, the typical intra-base station LTM supports subsequent LTM. A subsequent LTM cell switch means an LTM cell switch performed by the UE without reconfiguring the candidate configuration by the network. For example, the subsequent LTM may refer to an LTM cell switch to another candidate cell without reconfiguring the candidate cell through an RRC reconfiguration message. Subsequent LTM may be executed by repeating the steps of early synchronization, LTM execution, and LTM completion without releasing other LTM candidate configurations after completing each LTM. For reference, the LTM procedure is divided into an LTM preparation step of preparing an LTM candidate configuration, an early synchronization step, an LTM cell switch execution step, and an LTM cell switch completion step. The subsequent LTM is easily supported when providing LTM within one base station/gNB-CU (Intra-gNB-CU LTM). Because there was no change in the gNB-CU/base station hosting the PDCP, the LTM cell switch could be performed while maintaining the security key. However, the LTM between the base stations/gNB-CU (Inter-gNB-CU LTM) has changed in the base stations/gNB-CU during the cell switch process. In the process of changing from a base station/gNB-CU providing a source/serving cell to a base station/gNB-CU providing a target/candidate cell according to the LTM cell switch, it is necessary to define how to effectively process the security context. Additionally, it is necessary to define what additional operations are required to effectively support the subsequent LTM. To support the subsequent LTM, the methods described below may be combined/joined.

For example, the security key may be maintained in the LTM cell switch regardless of whether it is performed in the intra-base station/gNB-CU LTM or the inter-base station/gNB-CU LTM. For example, the security key may be maintained in the inter-base station/gNB-CU LTM cell switch. If the security key refresh/update/re-keying and/or ciphering/integrity protection algorithm change are required, the corresponding operations may be performed through L3 handover. The operations may be performed through intra-cell L3 handover. For example, an AS security key update procedure may be performed according to a master key update. Information for maintaining the L3 handover LTM configuration (or LTM candidate configuration) may be defined and instructed to the UE. When the UE receives a handover command (or an RRC reconfiguration message including reconfiguration with sync) set with the corresponding instruction, one or more stored LTM UE variables (e.g., VarLTM- Config used to store the reference configuration and LTM candidate configuration, VarLTM-Config, VarLTM-ServingCellNoResetID, and VarLTM-ServingCellUE-MeasuredTA-ID) may be maintained. Additionally/alternatively, when the UE receives a handover command (or an RRC reconfiguration message including reconfiguration with sync) set with the corresponding instruction, at least one piece of information among the current dedicated radio resource configurations associated with the corresponding cell group (e.g., logicalChannelIdentity and logicalChannelIdentityExt of RLC bearers configured in RLC-BearerConfig and the associated RLC entities, their state variables, buffers, and timers, MCG C-RNTI, PDCP and SDAP entities, their state variables, buffers and timers) may be maintained. Here, the LTM configuration information element is used to provide LTM candidate configurations and is associated with the MCG or SCG. The LTM configuration includes sub-configuration information elements, such as an LTM-reference configuration (ltm-reference configuration) including an RRC reconfiguration message used to construct a reference configuration for the LTM, information (attemptLTM-Switch) for instructing the LTM cell switch to be performed when the selected cell is an LTM candidate cell and is the first cell selected after failure, LTM candidate configuration list information to be added/modified (ltm-CSI-ResourceConfigList), LTM candidate configuration list information to be released (ltm-CSI-ResourceConfigList), a LTM CSI resource list to be added and/or modified, L2 reset instruction information for the serving cell to determine whether to reset the L2 for the candidate cell (e.g., ltm-ServingCellNoResetID or information for determining/instructing whether to reset the L2 for the serving cell), and information used to determine whether the UE needs to perform UE-based TA measurement (ltm-ServingCellUE-MeasuredTA-ID).

For another example, for the intra-base station/gNB-CU LTM, the security key may be maintained in the intra-base station/gNB-CU LTM cell switch. Further, for the inter-base station/gNB-CU LTM, the security key update/derivation/change (e.g., key derivation, key refresh, re-keying) may be supported in the inter-base station/gNB-CU LTM cell switch.

For another example, after the UE establishes an initial connection and/or establishes an initial/new LTM configuration (e.g., after the UE performs operations for the LTM configuration including an LTM configuration with the RRC reconfiguration message set to setup), the security key may be maintained in the LTM cell switch regardless of whether it is the intra-base station/gNB-CU LTM or the inter-base station/gNB-CU LTM.

For another example, after the UE establishes an initial connection and/or establishes an initial/new LTM configuration, the security key may be maintained in the intra-base station/gNB-CU LTM cell switch. Further, for the inter-base station/gNB-CU LTM, the security key update/derivation/change (e.g., key derivation, key refresh, re-keying) may be supported in the inter-base station/gNB-CU LTM cell switch.

For another example, if the previous LTM cell switch of the UE is the intra-base station/gNB-CU LTM cell switch, the security key may be maintained in the LTM cell switch regardless of whether the next LTM cell switch is the intra-base station/gNB-CU LTM or the inter-base station/gNB-CU LTM.

For another example, if the previous LTM cell switch of the UE is the intra-base station/gNB-CU LTM cell switch, and the next LTM cell switch is the intra-base station/gNB-CU LTM cell switch, the security key may be maintained. Further, if the next LTM cell switch is the inter-base station/gNB-CU LTM, the security key update/derivation/change (e.g. key derivation, key refresh, re-keying) may be supported in the inter-base station/gNB-CU LTM cell switch.

For another example, if the previous LTM cell switch of the UE is the inter-base station/gNB-CU LTM cell switch, the security key may be maintained in the LTM cell switch regardless of whether the next LTM cell switch is the intra-base station/gNB-CU LTM or the inter-base station/gNB-CU LTM.

For another example, if the previous LTM cell switch of the UE is the inter-base station/gNB-CU LTM cell switch, and the next LTM cell switch is the intra-base station/gNB-CU LTM cell switch, the security key may be maintained. Further, if the next LTM cell switch is the inter-base station/gNB-CU LTM, the security key update/derivation/change (e.g. key derivation, key refresh, re-keying) may be supported in the inter-base station/gNB-CU LTM cell switch.

For another example, if the previous LTM cell switch of the UE is the inter-base station/gNB-CU LTM cell switch, the security key update/derivation/change (e.g. key derivation, key refresh, re-keying) may be supported in the LTM cell switch regardless of whether the next LTM cell switch is the intra-base station/gNB-CU LTM or the inter-base station/gNB-CU LTM.

FIG. 7 shows an example of an LTM cell switch scenario.

The following description is based on the scenario shown in FIG. 7. This description is only for clarity and convenience, and the embodiments of the disclosure may be applied to other scenarios.

After the UE establishes the initial connection in a cell 1 (e.g., a cell provided through CU-1 and DU-1), the base station (e.g., gNB-CU1/gNB-DU1) may instruct an LTM configuration including the cell 1, a cell 2, a cell 3, and a cell 4 as LTM candidate configurations to the UE. The LTM candidate configurations may include Next Hop Chaining Counter/Count (NCC) used for K_{NG-RAN*} derivation. For example, the source/serving base station (e.g., gNB-CU1) derives K_{NG-RAN*} from the target/candidate PCI (e.g., cell 3 PCI or cell 4 PCI), their frequencies, Absolute Radio Frequency Channel Number (ARFCN)-DL/EARFCN (E-UTRA ARFCN)-DL, and from the currently active base station key or Next Hop (NH). The source/serving base station (e.g., gNB-CU1) may forward a {K_{NG-RAN*}, NCC} pair to the target/candidate base station (e.g., gNB-CU2) for the LTM candidate configuration. The target/candidate base station (e.g., gNB-CU2) may transmit the LTM candidate configuration including the received NCC to the source/serving base station. The source/serving base station (e.g. gNB-CU1) may instruct the corresponding information (the LTM candidate configuration including the NCC) to the UE. For example, the NCC may be set/reset/initialized to the value of '0' in the cell where the UE establishes the initial connection.

Then, the UE may perform the intra-CU LTM cell switch from the cell 1 to the cell 2 (e.g., a cell provided through CU-1 and DU-2) within one base station. In this case, the base station is not changed, and thus there is no need to perform a path switch procedure. The security key may be maintained in the LTM cell switch. In this case, the NCC = 0 stored in the UE may be maintained.

Then, the UE may perform the inter-CU LTM cell switch from the cell 2 to the cell 3 (e.g., a cell provided through CU-2 and DU-3) between different base stations. In this case, the LTM path switch procedure may be performed because the base station change is triggered. For example, in the LTM cell switch completion step, the target/candidate base station/gNB-CU (e.g., gNB-CU2) may transmit a path switch request message by an Access and Mobility Management Function (AMF) so that a core network can be triggered to switch a downlink path to the target/candidate base station/gNB-CU and to configure an NG-C interface with the target/candidate base station/gNB-CU. The core network may switch the downlink data path to the target/candidate base station. A User Plane Function (UPF) may send one or more end marker packets to the previous path. Upon receiving the path switch request message, a core network control plane entity (e.g., AMF) may increase the internally maintained Next Hop Chaining Counter/Count (NCC) value by 1 (e.g., from NCC=0 to NCC=1). The core network control plane entity (e.g., AMF) may calculate a new fresh Next hop (NH) parameter from the stored data. The core network control plane entity (e.g., AMF) may use an AMF key (KAMF) from the currently active 5G NAS security context for the calculation of a new fresh NH. The core network control plane entity (e.g., AMF) may transmit a path switch request acknowledgement message to the target/candidate base station (e.g., gNB-CU2). The message may include a security context (e.g. a {NH, NCC} pair (or information about one or more of NH and NCC)). The target/candidate base station (e.g. gNB-CU2) stores that information. In addition, the information may be used for a further handover.

For example, that information may be used in a subsequent intra-CU LTM cell switch. For example, an intra-CU LTM cell switch may be performed from the cell 3 (e.g., a cell provided through CU-2 and DU-3) to the cell 4 (e.g., the cell provided through CU-2 and DU-4) within one base station. When the intra-CU LTM cell switch is performed, the base station may instruct the security context information (e.g., one or more pieces of information among the NCC, the NH, and the {NH, NCC} pair) to the UE. (Alternatively, when the corresponding intra-CU LTM cell switch is performed, the base station may instruct the UE with information for instructing the security key update/derivation (or base station key update or master key update). The UE may be instructed to perform the security key update.) For example, the LTM cell switch MAC CE may include the information (e.g., the security context information, and the security context update instruction information). To this end, the MAC CE including the LCID may be included to be distinct from the typical LTM cell switch MAC CE. The MAC CE may include a field to indicate the presence or absence of security context information. Alternatively, the typical LTM cell switch MAC CE and the MAC CE including the security context information may be transmitted simultaneously (or sequentially, within a certain period of time, in a specific order, or one after another).

The UE may derive a base station key (KgNB) based on the corresponding security context information. For example, the UE may use the received NCC value to derive the base station key based on the current base station key or Next Hop (NH) (derive or update the KgNB key based on the current KgNB key or the NH, using the nextHopChainingCount value).

For another example, the information may be used in the subsequent intra-CU LTM cell switch. The intra-CU LTM cell switch may be performed from the cell 3 (e.g., the cell provided through CU-2 and DU-3) to the cell 4 (e.g., the cell provided through CU-2 and DU-4) within the same base station. When the intra-CU LTM cell switch is performed, the base station may use the security context information received from the AMF (e.g., the {NH, NCC} pair (or information about one or more of NH and NCC)) to derive the base station key.

The UE may increase the Next Hop Chaining Counter/Count (NCC) value by 1 (for example, from NCC=0 to NCC=1), which has been internally maintained when the UE performs the previous inter-CU LTM cell switch from the cell 2 to the cell 3 (e.g., the cell provided through CU-2 and DU-3) between different base stations. Information to instruct this may be defined and configured in the UE through the RRC message. For clarity and convenience, this information is referred to as "LTM-security parameter update" information. The "LTM-security parameter update" information will be described later.

For another example, the information may be used to the subsequent inter-CU LTM cell switch. The inter-CU LTM cell switch from the cell 3 (e.g., the cell provided through CU-2 and DU-3) to the cell 2 (e.g., the cell provided through CU-1 and DU-3) may be performed between different base stations. When the inter-CU LTM cell switch is performed, the base station may instruct the security context to the UE. (Alternatively, when the corresponding inter-CU LTM cell switch is performed, the base station may instruct the security context information (e.g., information about at least one of the NCC, the NH, and the {NH, NCC} pair) to the UE). (Alternatively, when the corresponding inter-CU LTM cell switch is performed, the base station may instruct information for instructing the security key update (or master key update) to the UE. Then, the UE may perform the security key update (or master key update).) For example, the LTM cell switch MAC CE may include the information (e.g., the security context information, the security context update instruction information). To this end, the MAC CE including the LCID, which is distinct from the typical LTM cell switch MAC CE, may be included. The MAC CE may include a field to instruct the presence or absence of security context information. Alternatively, the typical LTM cell switch MAC CE and the MAC CE including the security context information may be transmitted simultaneously (or sequentially, within a certain period of time, in a specific order, or one after another).

The UE may derive the base station key (KgNB) based on the corresponding security context information. For example, the received NCC value may be used to derive the base station key based on the current base station key or the NH.

For another example, the information may be used in the subsequent inter-CU LTM cell switch. The inter-CU LTM cell switch may be performed from the cell 3 (e.g., a cell provided through CU-2 and DU-3) to the cell 2 (e.g., a cell provided through CU-1 and DU-3) between different base stations. When the inter-CU LTM cell switch is performed, the base station may use the security context information received from the AMF (e.g., the {NH, NCC} pair (or information about at least one of the NH and the NCC)) to derive the base station key.

The UE may increase the Next Hop Chaining Counter/Count (NCC) value by 1 (for example, from NCC=0 to NCC=1), which has been internally maintained when the UE performs the previous inter-CU LTM cell switch from the cell 2 to the cell 3 (e.g., the cell provided through CU-2 and DU-3) between different base stations.

The typical LTM supports only cell change within a gNB-CU (intra-gNB-CU mobility). In other words, signaling between base stations was not necessary. However, in order to support the LTM mobility between different base stations/gNB-CUs (inter-gNB-CU LTM mobility), it may be necessary to support sequence number (SN) status transmission between the base stations so as to reduce service interruption and/or support lossless data transmission.

For example, when (or after) the source/serving base station receives early timing advance (TA) acquisition information from the target/candidate base station, the source base station may send the target/candidate base station a message for transmitting the SN status (e.g., a SN STATUS Transfer message/Early STATUS Transfer message, or an LTM SN STATUS message distinct from the SN STATUS Transfer message/Early STATUS Transfer message).

For example, the UE performs downlink (DL) synchronization on a candidate cell provided through a target/candidate base station before receiving a cell switch command. When UE-based TA measurement is configured, the UE obtains a TA value of a candidate cell by measurement, and/or the UE may obtain the TA of the candidate cell through Contention Free Random Access (CFRA) triggered by the PDCCH order from the source cell. The target/candidate gNB-DU providing the candidate cell may transmit early TA acquisition information to the target/candidate gNB-CU. The target/candidate base station/gNB-CU providing the candidate cell (or associated with the candidate cell or associated with the corresponding gNB-DU) may transmit the early TA acquisition information to the source base station. The source/serving base station may send the target/candidate base station the message (e.g. SN STATUS Transfer message) for transmitting the SN STATUS. The aforementioned early TA acquisition information may include at least one of a TA value, associated CFRA resource information, target/candidate cell ID, LTM configuration identification information associated with the target/candidate cell ID, target base station/gNB-CU ID, source gNB-DU ID, and source serving cell ID, and source/serving base station/gNB-CU ID.

For another example, when (or after) the source/serving gNB-DU receives the L1 measurement report from the UE, the source/serving base station may send the target/candidate base station the message for transmitting the SN STATUS (e.g., an SN STATUS Transfer message/Early STATUS Transfer message or an LTM SN STATUS message distinct from the SN STATUS Transfer message/Early STATUS Transfer message).

For another example, when (or after) the source/serving gNB-DU decides to execute the LTM to the candidate/target cell (through an L1 measurement report received from the UE), the source base station may send the target/candidate base station a message for transmitting the SN STATUS (e.g., an SN STATUS Transfer message/Early STATUS Transfer message or an LTM SN STATUS message distinct from the SN STATUS Transfer message/Early STATUS Transfer message).

For another example, when (or after) the source base station transmits an LTM Cell Switch command (e.g., LTM Cell Switch MAC CE) to the UE, the source base station may send the target/candidate base station a message for transmitting the SN STATUS.

For another example, when (or after) the source base station/gNB-CU receives a "CELL SWITCH NOTIFICATION message" for instructing the initiation of a cell switch command to the UE from the source gNB-DU, the source base station may send the target/candidate base station the message for transmitting the SN STATUS.

For another example, when (or after) the target/candidate base station/gNB-CU sends the source base station/gNB-CU a message for indicating success in handover (e.g., HANDOVER SUCCESS message), the source base station may send the target/candidate base station the message for transmitting the SN STATUS.

For another example, the aforementioned message for transmitting the SN STATUS may include an SN STATUS Transfer message or an Early STATUS Transfer message. Alternatively, the aforementioned message for transmitting the SN STATUS may include an SN STATUS Transfer message or an XnAP message distinct from the Early STATUS Transfer message.

For another example, the aforementioned message for transmitting the SN STATUS includes a list of LTM candidate cells (e.g., including one or more pieces of information among LTM candidate cell IDs, LTM candidate configuration IDs (LTM-CandidateId, or LTM-CandidateId minus 1), LTM candidate PCIs, measurement object (measObjectToAddMod) containers specified in TS 38.331, and report configuration (reportConfigToAddMod) containers). The target/candidate base station may store the information in the UE context and use it.

For another example, the aforementioned message for transmitting the SN STATUS includes at least one piece of information among a DRB ID forwarded by the source base station/gNB-CU to the target base station/gNB-CU, a PDCP sequence number (SN) of the first PDCP service data unit (SDU), a downlink COUNT value indicating a hyper frame number (HFN).

For another example, the aforementioned message for transmitting the SN STATU may include at least one piece of information among a DRB ID and a discard downlink (DL) COUNT value as information about DRBs Subject To DL Discarding.

For another example, the aforementioned message for transmitting the SN STATUS may include an uplink PDCP SN receiver status for RLC acknowledge mode (AM) data radio bearer (DRB) to which PDCP status preservation is applied (e.g., a PDCP SN of the first lost UL PDCP SDU and a reception status bitmap of out-of-sequence UL PDCP SDUs that require retransmission by the UE in the target cell) and a downlink PDCP transmitter status (e.g., the next PDCP SN that the target gNB shall assign to new PDCP SDUs, not having a PDCP SN yet). Here, in the uplink PDCP SN receiver state, the first lost UL PDCP SDU indicates the start of the uplink PDCP SDUs to be transmitted by a user plane function (UPF).

For another example, after the source base station transmits an LTM cell switch command (e.g., LTM Cell Switch MAC CE) to the UE (or after the source base station/gNB-CU receives a "CELL SWITCH NOTIFICATION message" that instructs the UE to initiate the cell switch command from the source gNB-DU), the target/candidate base station/gNB-CU transmits a message for indicating success in handover (for example, a HANDOVER SUCCESS message) to the source base station/gNB-CU, so that the source base station can additionally transmit a message for transmitting the SN STATUS to the target/candidate base station until the source base station transmits the SN STATUS to the target/candidate base station. With this, it is possible to indicate the discard of PDCP SDUs that have already been forwarded. The target/candidate base station may prevent the forwarded downlink PDCP SDUs, of which COUNT is smaller than the transmitted downlink COUNT value, from being transmitted to the UE. Further, (if no transmission was attempted), the corresponding PDCP SDUs may be discarded.

For another example, the target/candidate base station may send the source base station a message containing the information to instruct the stop of transmitting the SN STATUS. The source base station may stop forwarding data to the target/candidate base station.

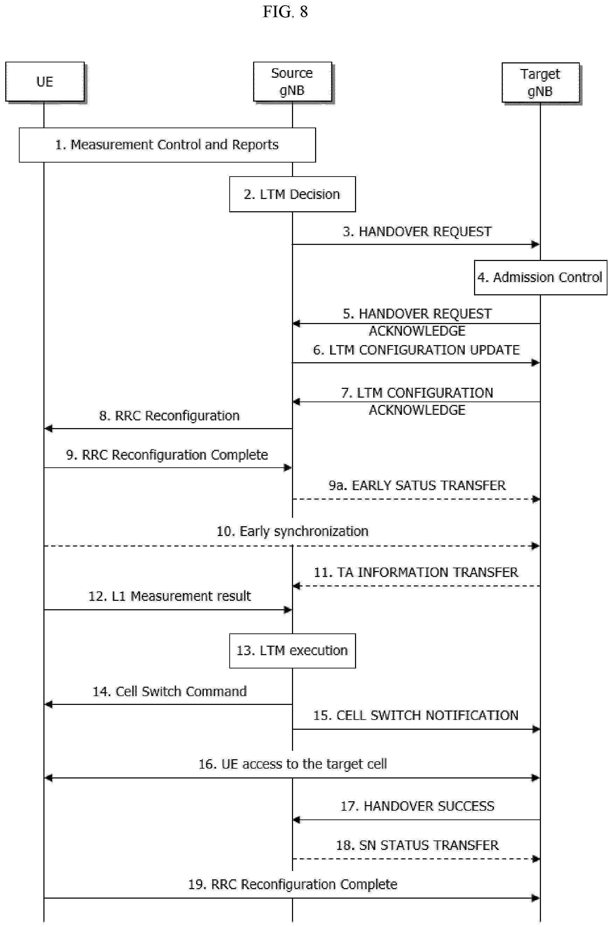

**FIG. 8** **illustrates the procedure for inter-gNB LTM according to an embodiment of the disclosure.**

Hereinafter, the procedure inter-gNB LTM will be described in detail with reference to FIG. 8.

1. The UE sends a MeasurementReport message (L3 measurement result) to the source gNB containing measurements of neighbouring cells.

2. The source gNB decides to configure inter-gNB LTM.

3. The source gNB requests inter-gNB LTM for one or more candidate cells belonging to one or more candidate gNB(s). The source gNB initiates a HANDOVER REQUEST message per candidate cell containing one candidate cell ID and the CSI resource configuration for subsequent LTM. The source gNB may request the candidate gNB(s) to provide the CSI-RS configuration.

4. Admission Control may be performed by the candidate gNB(s).

5. The candidate gNB(s) prepares the LTM configuration(s) and sends inter-gNB response (HO REQUEST ACKNOWLEDGE) to the source gNB including the generated RRC configurations for the accepted candidate cell. The candidate gNB(s) may also include the CSI-RS configuration upon request.

6. The source gNB sends an LTM CONFIGURATION UPDATE message to the candidate gNB(s) to update the LTM configurations of candidate cell(s). The source gNB may include the common CSI-RS resource configuration.

7. The candidate gNB(s) sends the LTM CONFIGURATION UPDATE ACKNOWLEDGE message to the source gNB. The candidate gNB(s) may also provide the CSI-RS report configuration.

8. The source gNB sends an RRCReconfiguration message to the UE.

9. The UE stores the LTM candidate configurations and sends an RRCReconfigurationComplete message to the source gNB.

9a If early data forwarding is applied, the source gNB sends the EARLY STATUS TRANSFER message.

10/11. Early synchronization to some LTM candidate cell(s) belonging to the candidate gNB(s) may be performed. The candidate gNB(s) sends the TA INFORMATION TRANSFER message to the source gNB if early TA acquisition is performed to the candidate gNB(s).

12. The UE performs L1 measurements on the configured LTM candidate cell(s) and transmits L1 measurement reports to the source gNB. L1 measurement should be performed as long as RRC reconfiguration (step 8) is applicable.

13. The source gNB determines to initiate inter-gNB LTM.

14. The source gNB decides to execute cell switch to a target cell and transmits an LTM cell switch command MAC CE triggering cell switch by including a target configuration ID which indicates the index of the candidate configuration of the target cell, a beam indicated with a TCI state or beams indicated with DL and UL TCI states, and a timing advance command for the target cell, if available. The UE switches to the target cell and applies the candidate configuration indicated by the target configuration ID.

15. The source gNB sends the CELL SWITCH NOTIFICATION message to the target gNB to indicate the initiation of Cell Switch command to the UE.

16. The target gNB detects the UE access. The UE performs the random access procedure towards the target cell, if UE does not have valid TA of the target cell as specified in clause 5.18.35 of TS 38.321[6].

17/18. The target gNB sends the HANDOVER SUCCESS message to the source gNB to inform that the UE has successfully accessed the target cell. In return, the source gNB sends the SN STATUS TRANSFER message following the principles described in step 7 of Intra-AMF/UPF Handover in clause 9.2.3.2.1.

19. The UE sends an RRCReconfigurationComplete message to the target gNB.

In the aforementioned inter-base station (inter-gNB) LTM procedure, LTM-related operations are required to consider both the information for determining/instructing whether to reset L2 (e.g., ltm-NoResetID) and the information for determining/instructing whether to reestablish PDCP.

According to an embodiment of the present disclosure, the UE performs first comparison between a first identification information value of a serving cell and a second identification information value of a target cell to determine whether to reestablish a packet data convergence protocol (PDCP) in an LTM procedure. In addition, after performing the first comparison in the LTM procedure, the UE performs second comparison between a third identification information value of the serving cell and a fourth identification information value of the target cell to determine whether to reset the L2. Then, the UE performs an L2 reset operation based on the first comparison and the second comparison in the LTM procedure.

The L2 reset operation may include a radio link control (RLC) reconfiguration. In addition, the L2 reset operation may further include a PDCP data recovery for an acknowledged mode (AM) data radio bearer (DRB).

Meanwhile, the first identification information value and the second identification information value may be equal to each other, and the third identification information value and the fourth identification information value may be different.

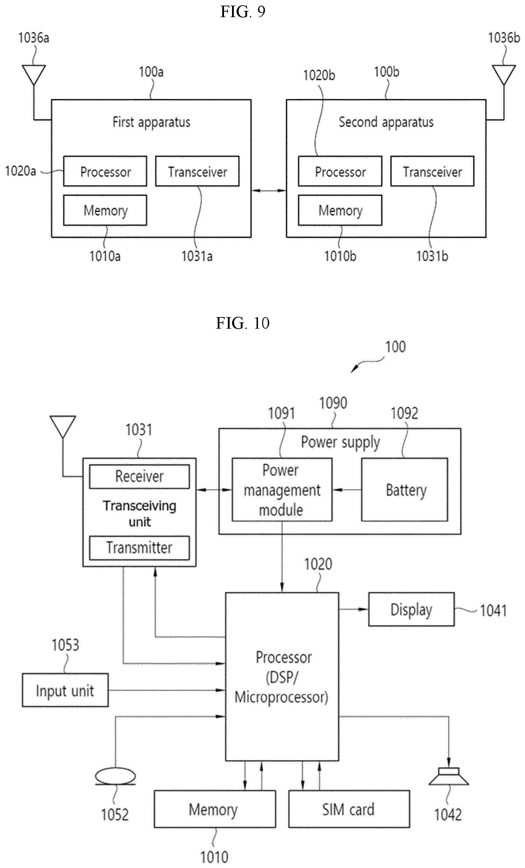

**FIG. 9** **is a block diagram showing apparatuses according to an embodiment of the disclosure.**

Referring to FIG. 9, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 103 1a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a, and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 10** **is a block diagram showing a terminal (e.g., user equipment; UE) according to an embodiment of the disclosure.**

In particular, FIG. 10 illustrates the previously described apparatus of FIG. 9 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of the constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

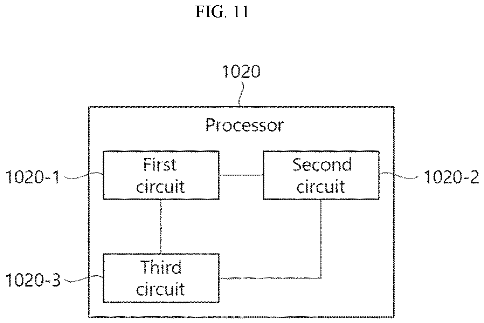

**FIG. 11** **is a block diagram of a processor in accordance with an embodiment.**

Referring to FIG. 11, a processor 1020 may include a plurality of circuits to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

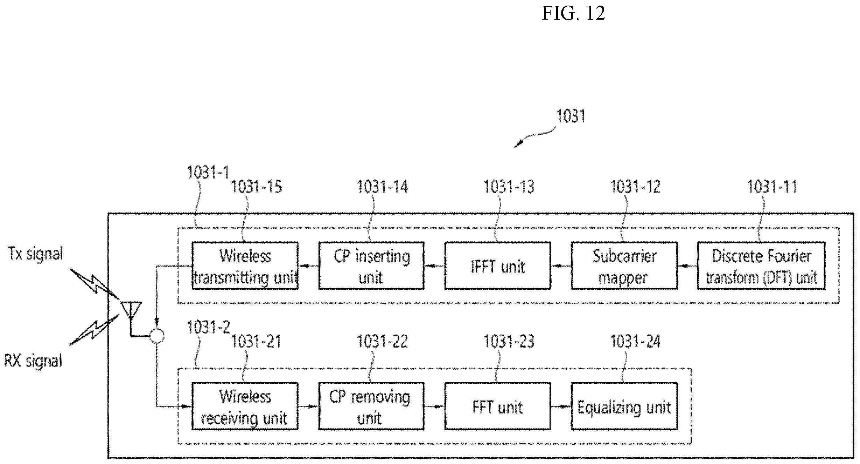

**FIG. 12** **is a detailed block diagram of a transceiver of a first apparatus shown in** **FIG. 9** **or a transceiving unit of an apparatus shown in** **FIG. 10****.**

Referring to FIG. 12, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, in a wireless communication system, intra-base station LTM and inter-base station LTM are effectively performed by taking L2 reset and PDCP re-establishment into account for a UE.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of operating a user equipment (UE) in a wireless communication system, the method comprising:
performing first comparison between a first identification information value of a serving cell and a second identification information value of a target cell to determine whether to reestablish a packet data convergence protocol (PDCP) in a layer 1 (L1)/layer 2 (L2) triggered mobility (LTM) procedure;
performing second comparison between a third identification information value of the serving cell and a fourth identification information value of the target cell to determine whether to reset the L2, after performing the first comparison in the LTM procedure; and
performing an L2 reset operation based on the first comparison and the second comparison in the LTM procedure.

2. The method of claim 1, wherein the L2 reset operation comprises a radio link control (RLC) reconfiguration.

3. The method of claim 2, wherein the L2 reset operation further comprises a PDCP data recovery for an acknowledged mode (AM) data radio bearer (DRB).

4. The method of claim 1, wherein the first identification information value and the second identification information value are equal to each other.

5. The method of claim 4, wherein the third identification information value and the fourth identification information value are different from each other.

6. The method of claim 1, wherein the LTM procedure comprises an inter-base station LTM procedure.

7. A user equipment (UE) in a wireless communication system, comprising:
at least one processor; and
at least one memory configured to store instructions and operably electrically connectable to the at least one processor, wherein operations performed based on the instructions executed by the at least one processor comprise:
performing first comparison between a first identification information value of a serving cell and a second identification information value of a target cell to determine whether to reestablish a packet data convergence protocol (PDCP) in a layer 1 (L1)/layer 2 (L2) triggered mobility (LTM) procedure;
performing second comparison between a third identification information value of the serving cell and a fourth identification information value of the target cell to determine whether to reset a layer 2 (L2), after performing the first comparison in the LTM procedure; and
performing an L2 reset operation based on the first comparison and the second comparison in the LTM procedure.

8. The UE of claim 7, wherein the L2 reset operation comprises a radio link control (RLC) reconfiguration.

9. The UE of claim 8, wherein the L2 reset operation further comprises a PDCP data recovery for an acknowledged mode (AM) data radio bearer (DRB).

10. The UE of claim 7, wherein the first identification information value and the second identification information value are equal to each other.

11. The UE of claim 10, wherein the third identification information value and the fourth identification information value are different from each other.

12. The UE of claim 7, wherein the LTM procedure comprises an inter-base station LTM procedure.
